# EUROPEAN PATENT APPLICATION

(11) **EP 4 192 150 A1**
(43) Date of publication of application: **07.06.2023**
(21) Application number: 20946975.8
(22) Date of filing: 27.07.2020
(51) Int. Cl.: H04W 72/04

(54) **CHANNEL TRANSMISSION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: XU, Weijie, Dongguan, Guangdong 523860 (CN)
(74) Representative: Novagraaf Technologies
(86) International application number: PCT/CN2020/104981
(87) International publication number: WO 2022/021031

(57) **Abstract**

The present application relates to a channel transmission method, a terminal device, and a network device. The channel transmission method comprises: on the basis of a control resource set CORESET 0 or a synchronization signal block SSB, a terminal device determines an initial downlink DL bandwidth part BWP; and, on the basis of the initial DL BWP, the terminal device receives a common channel, the bandwidth of the initial DL BWP being less than or equal to the maximum bandwidth supported by the terminal device. The embodiments of the present application use the CORESET 0 or SSB to determine the initial DL BWP of the terminal device, enabling the terminal device to complete reception of the common channel in the initial DL BWP.

## Description

### TECHNICAL FIELD

The present disclosure relates to the communication field, and more specifically, to a channel transmission method, terminal device and network device.

### BACKGROUND

With the continuous evolution and help of wireless communication technology, Internet of Things (IoT) technology is developing rapidly. For example, the series standards of MTC (Machine-Type Communication) / eMTC (LTE enhanced MTC, MTC based on LTE evolution), and NB-IoT (Narrow Band Internet of Things) promoted by the 3GPP (3rd Generation Partnership Project) organization have become candidate technical standards for 5G massive (massive) MTC technology. These technical standards are expected to play a huge role in all aspects of people's production and life, such as smart homes, smart cities, smart factories, remote monitoring, and smart transportation. MTC/eMTC and NB-IoT terminals have low cost, low price, support for ultra-low power consumption, and support for deep and wide coverage scenarios and other technical advantages. Therefore, it is conducive to the rapid popularization of the initial stage of the development of the Internet of Things technology. However, these technologies also have limitations in some application scenarios. Since MTC/eMTC and NB-IoT support some applications with low data rates and high transmission delays, it cannot be applied to some IoT scenarios that require relatively high rates, such as video surveillance in smart security system, or industrial applications that require relatively low latency. However, if New Radio (NR) terminals are used directly, the cost will be relatively high because the design indicators of NR terminals, such as transmission rate and transmission delay, far exceed the actual requirements of these scenarios.

In order to improve the terminal system in 5G massive MTC scenarios, it is possible to design a NR MTC terminal type that supports medium transmission rate and medium delay requirements and has low cost. Currently, 3GPP calls this type of NR MTC terminal RedCap (Reduced Capability NR Devices) terminal. The bandwidth supported by RedCap terminals is relatively narrow. However, if the bandwidth supported by the terminal is relatively narrow, the channel may not be fully received.

### SUMMARY

Embodiments of the present application provide a channel transmission method, a terminal device, and a network device, which can enable the terminal device to receive common channels more completely.

The embodiment of the present application provides a channel transmission method, including:
determining, by a terminal device, an initial downlink DL bandwidth part BWP based on a control resource set CORESET 0 or a synchronization signal block SSB; and
receiving, by the terminal device, a common channel based on the initial DL BWP;
wherein, a bandwidth of the initial DL BWP is less than or equal to a maximum bandwidth supported by the terminal device.

The embodiment of the present application also provides a channel transmission method, including:
determining, by a terminal device, a frequency range for transmission of a common channel based on a control resource set CORESET 0 or a synchronization signal block SSB; and
receiving, by the terminal device, the common channel based on the frequency range for transmission of the common channel.

The embodiment of the present application also provides a channel transmission method, including:
transmitting, by a network device, a common channel to a terminal device based on an initial downlink DL bandwidth part BWP;
wherein, the initial DL BWP is determined based on a control resource set CORESET 0 or a synchronization signal block SSB, and a bandwidth of the initial DL BWP is less than or equal to a maximum bandwidth supported by the terminal device.

The embodiment of the present application also provides a channel transmission method, including:
transmitting, by a network device, a common channel to a terminal device based on a frequency range for transmission of the common channel;
wherein, the frequency range for transmission of the common channel is determined based on a control resource set CORESET 0 or a synchronization signal block SSB.

The embodiment of the present application provides a terminal device, including:
a first determining unit, configured to determine an initial downlink DL bandwidth part BWP based on a control resource set CORESET 0 or a synchronization signal block SSB; and
a receiving unit, configured to receive a common channel based on the initial DL BWP;
wherein, a bandwidth of the initial DL BWP is less than or equal to a maximum bandwidth supported by the terminal device.

The embodiment of the present application also provides a terminal device, including:
a second determining unit, configured to determine a frequency range for transmission of a common channel based on a control resource set CORESET 0 or a synchronization signal block SSB;
wherein the second receiving unit is configured to receive the common channel based on the frequency range for transmission of the common channel.

The embodiment of the present application provides a network device, including:
a first transmitting unit, configured to transmit a common channel to a terminal device based on an initial downlink DL bandwidth part BWP;
wherein, the initial DL BWP is determined based on a control resource set CORESET 0 or a synchronization signal block SSB, and a bandwidth of the initial DL BWP is less than or equal to a maximum bandwidth supported by the terminal device.

The embodiment of the present application also provides a network device, including:
a second sending unit, configured to send a common channel to a terminal device based on a frequency range for transmission of the common channel;
wherein, the frequency range for transmission of the common channel is determined based on a control resource set CORESET 0 or a synchronization signal block SSB.

The embodiment of the present application provides a terminal device, including a processor and a memory. The memory is used to store a computer program, and the processor is used to call and run the computer program stored in the memory, so that the terminal device executes the above-mentioned channel transmission method.

The embodiment of the present application provides a network device, including a processor and a memory. The memory is used to store a computer program, and the processor is used to call and run the computer program stored in the memory, so that the network device executes the above-mentioned channel transmission method.

The embodiment of the present application provides a chip configured to implement the above channel transmission method. Specifically, the chip includes: a processor, configured to call and run a computer program from the memory, so that a device installed with the chip executes the above-mentioned channel transmission method.

The embodiment of the present application provides a computer-readable storage medium, which is used to store a computer program, and when the computer program is run by a device, the device executes the above-mentioned channel transmission method.

The embodiment of the present application provides a computer program product, including computer program instructions, where the computer program instructions cause a computer to execute the above channel transmission method.

The embodiment of the present application provides a computer program that, when running on a computer, causes the computer to execute the above channel transmission method.

In this embodiment of the present application, CORESET 0 or SSB is used to determine the initial DL BWP of the terminal device, so that the terminal device can completely receive the common channel in the initial DL BWP. Using CORESET 0 or SSB to determine the frequency range for transmission of the common channel can also enable the terminal device to receive the common channel completely.

### BRIEF DESCRIPTION OF THE DRAWINGS

Fig. 1 is a schematic diagram of an application scenario according to an embodiment of the present application.
FIG. 2 is a schematic diagram of determining an initial DL BWP based on CORESET 0.
FIG. 3 is a schematic diagram of a RedCap terminal whose bandwidth is smaller than that of CORESET0.
FIG. 4 is a schematic flowchart of a channel transmission method according to an embodiment of the present application.
FIG. 5a is a schematic flowchart of a channel transmission method according to another embodiment of the present application.
FIG. 5b is a schematic diagram of receiving misalignment in a channel transmission method according to another embodiment of the present application.
FIG. 6 is a schematic flowchart of a channel transmission method according to another embodiment of the present application.
FIG. 7 is a schematic flowchart of a channel transmission method according to another embodiment of the present application.
FIG. 8 is a schematic diagram of determining the starting frequency point of the receiving bandwidth of the RedCap terminal.
FIG. 9 is a schematic diagram of determining the ending frequency point of the receiving bandwidth of the RedCap terminal.
FIG. 10 is a schematic diagram of determining the center frequency point of the receiving bandwidth of the RedCap terminal.
FIG. 11 is a schematic diagram of determining the initial DL BWP of the RedCap terminal based on the initial PRB of CORESET 0.
FIG. 12 is a schematic diagram of determining the initial DL BWP of the RedCap terminal based on the ending PRB of CORESET 0.
FIG. 13 is a schematic diagram of determining the initial DL BWP of the terminal based on the center frequency point of SSB.
FIG. 14 is a schematic block diagram of a terminal device according to an embodiment of the present application.
FIG. 15 is a schematic block diagram of a terminal device according to another embodiment of the present application.
FIG. 16 is a schematic block diagram of a network device according to an embodiment of the present application.
FIG. 17 is a schematic block diagram of a network device according to another embodiment of the present application.
FIG. 18 is a schematic block diagram of a communication device according to an embodiment of the present application.
FIG. 19 is a schematic block diagram of a chip according to an embodiment of the present application.
FIG. 20 is a schematic block diagram of a communication system according to an embodiment of the present application.

### DETAILED DESCRIPTION

Hereinafter, the technical solutions in the embodiments of the present application will be described with reference to the drawings in the embodiments of the present application.

The technical solutions of the embodiments of the present application can be applied to various communication systems, for example: Global System of Mobile communication (GSM) system, Code Division Multiple Access (CDMA) system, Wideband Code Division Multiple Access (WCDMA) system, General Packet Radio Service (GPRS), Long Term Evolution (LTE) system, Advanced long term evolution (LTE-A) system , New Radio (NR) system, LTE-based access to unlicensed spectrum, (LTE-U) system, NR-based access to unlicensed spectrum (NR-U) system, Non-Terrestrial Networks (NTN) system, Universal Mobile Telecommunications System (UMTS), Wireless Local Area Networks (WLAN), Wireless Fidelity (WiFi), fifth-generation communication (5th-Generation, 5G) system or other communication systems, etc.

Generally speaking, the number of connections supported by traditional communication systems is limited and easy to implement. However, with the development of communication technology, mobile communication systems will not only support traditional communication, but also support, for example, Device to Device (D2D) communication, Machine to Machine (M2M) communication, Machine Type Communication (MTC), Vehicle to Vehicle (V2V) communication, or Vehicle to everything (V2X) communication, etc., the embodiments of the present application may also be applied to these communication systems.

Optionally, the communication system in the embodiment of the present application can be applied to a carrier aggregation (CA) scenario, a dual connectivity (DC) scenario, or a standalone (SA) deployment scene.

Optionally, the communication system in the embodiment of the present application may be applied to an unlicensed spectrum, wherein the unlicensed spectrum may also be considered as a shared spectrum; or, the communication system in the embodiment of the present application may also be applied to a licensed spectrum, wherein, the licensed spectrum can also be considered as non-shared spectrum.

The embodiments of the present application describe various embodiments in conjunction with network device and terminal device, wherein the terminal device may also be referred to as user equipment (UE), access terminal, user unit, user station, mobile station, mobile site, remote station, remote terminal, mobile device, user terminal, terminal, wireless communication device, user agent or user device, etc.

The terminal device can be a station (ST) in a WLAN, a cellular phone, a cordless phone, a Session Initiation Protocol (SIP) phone, a Wireless Local Loop (WLL) station, a Personal Digital Assistant (PDA) device, handheld devices with wireless communication functions, computing devices or other processing devices connected to wireless modems, vehicle-mounted devices, wearable devices, next-generation communication systems such as terminal devices in NR networks, or the terminal device in a future evolved public land mobile network (PLMN) network, etc.

In the embodiment of this application, the terminal device can be deployed on land, including indoor or outdoor, handheld, wearable or vehicle-mounted; the terminal device can also be deployed on water (such as ships, etc.); the terminal device can also be deployed in the air (such as aircraft, balloons and satellites).

In this embodiment of the application, the terminal device may be a mobile phone, a tablet computer (Pad), a computer with a wireless transceiver function, a virtual reality (VR) terminal device, an augmented reality (AR) terminal device, wireless terminal devices in industrial control, wireless terminal devices in self driving, wireless terminal devices in remote medical, wireless terminal devices in smart grid, wireless terminal device in transportation safety, wireless terminal device in smart city, or wireless terminal device in smart home.

As an example but not a limitation, in this embodiment of the present application, the terminal device may also be a wearable device. Wearable devices can also be called wearable smart devices, which is a general term for the application of wearable technology to intelligently design daily wear and develop wearable devices, such as glasses, gloves, watches, clothing and shoes. A wearable device is a portable device that is worn directly on the body or integrated into the user's clothing or accessories. Wearable devices are not only a hardware device, but also achieve powerful functions through software support, data interaction, and cloud interaction. Generalized wearable smart devices include those of full-featured, largesized, complete or partial functions without relying on smart phones, such as smart watches or smart glasses, etc., and those only focus on a certain type of application functions, and need to cooperate with other devices such as smart phones, such as various smart bracelets and smart jewelry for physical sign monitoring.

In the embodiment of this application, the network device may be a device used to communicate with mobile devices, and the network device may be an access point (AP) in WLAN, a base transceiver station (BTS) in GSM or CDMA, or a base station (NodeB, NB) in WCDMA, or an evolved base station (Evolutional Node B, eNB or eNodeB) in LTE, or a relay station or an access point, or a vehicle-mounted device, a wearable device, and a network device (gNB) in an NR network, or the network device in the future evolution of the PLMN network or the network device in the NTN network, etc.

As an example but not a limitation, in this embodiment of the present application, the network device may have a mobile feature, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station installed on land, water, and other locations.

In this embodiment of the application, the network device may provide services for a cell, and the terminal device communicates with the network device through the transmission resources (for example, frequency domain resources, or spectrum resources) used by the cell. The cell may be a cell corresponding to a network device (e.g., a base station), the cell may belong to a macro base station, or a base station corresponding to a small cell, wherein the small cell may include: Metro cell, Micro cell, Pico cell, Femto cell, etc. These small cells have the characteristics of small coverage and low transmission power, and are suitable for providing high-speed data transmission services.

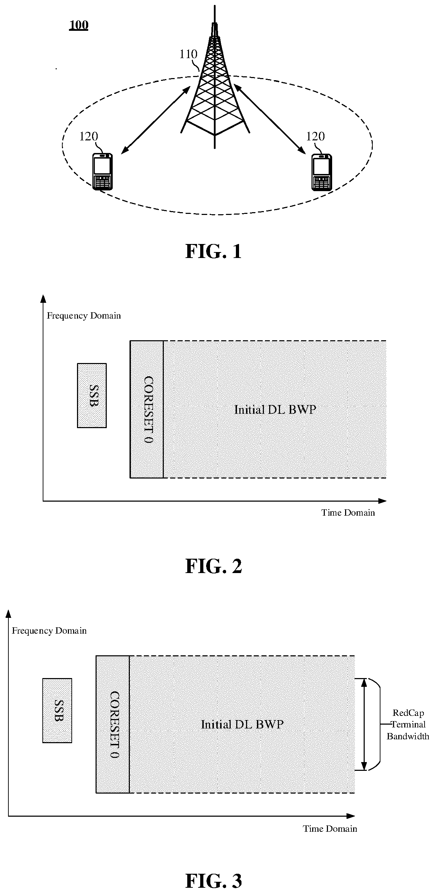

FIG. 1 exemplarily shows a communication system 100. The communication system includes a network device 110 and two terminal devices 120. Optionally, the communication system 100 may include multiple network devices 110, and the coverage of each network device 110 may include other numbers of terminal devices 120, which is not limited in this embodiment of the present application.

Optionally, the communication system 100 may also include other network entities such as a mobility management entity (MME), an access and mobility management function (AMF), which is not limited in this embodiment of the present application.

The network device may further include access network device and core network device. That is, the wireless communication system also includes multiple core networks for communicating with the access network device. The access network device can be the evolved base station (evolutional node B, referred to as eNB or e-NodeB), macro base station, micro base station (also called "small base station"), pico base station, access point (AP), transmission point (TP) or new generation base station (new generation Node B, gNodeB), etc., in a long-term evolution (LTE) system, a next-generation (mobile communication system) (next radio, NR) system, or an authorized auxiliary access long-term evolution (LAA- LTE) system.

It should be understood that a device with a communication function in the network/system in the embodiment of the present application may be referred to as a communication device. Taking the communication system shown in FIG. 1 as an example, the communication equipment may include network device and terminal device with communication functions. It may include other devices in the communication system, such as network controllers, mobility management entities and other network entities, which are not limited in this embodiment of the present application.

It should be understood that the terms "system" and "network" are often used interchangeably herein. The term "and/or" in this article is just an association relationship describing associated objects, which means that there can be three relationships, for example, A and/or B can mean these three situations: A exists alone, A and B exist simultaneously, and B exists alone. In addition, the character "/" in this article generally indicates that the contextual objects are an "or" relationship.

It should be understood that the "indication" mentioned in the embodiments of the present application may be a direct indication, may also be an indirect indication, and may also mean that there is an association relationship. For example, A indicates B, which can mean that A directly indicates B, for example, B can be obtained through A; it can also indicate that A indirectly indicates B, for example, A indicates C, and B can be obtained through C; it can also indicate that there is an association relation between A and B.

In the description of the embodiments of the present application, the term "corresponding" may indicate that there is a direct or indirect correspondence between the two, or that there is an association between the two, or the relation of indicating and being indicated, configuring and being configured, or the like.

In order to facilitate the understanding of the technical solutions of the embodiments of the present application, the related technologies of the embodiments of the present application are described below. The following related technologies can be combined with the technical solutions of the embodiments of the present application as optional solutions, and all of them belong to the scope of the embodiments of the present application.

At present, NR terminals need to support at least 2 receiving channels, and NR terminals on some frequency bands need to support 4 receiving channels. Each receiving channel includes a receiving antenna, a filter, a power amplifier (PA), an analog digital (AD) sampler and other components. Therefore, reducing the number of radio frequency channels that NR terminals need to be equipped with will significantly reduce terminal costs. By reducing the terminal with two radio frequency channels to one radio frequency channel, the cost of the chip module can be reduced by about 1/3. Therefore, the RedCap terminal can be equipped with fewer antennas to reduce the cost of the terminal.

On the other hand, a normal NR terminal needs to support a wider transmission bandwidth, for example, an FR1 terminal needs to support a maximum bandwidth of 100 MHz. In order to reduce the cost of the RedCap terminal and reduce the power consumption of the RedCap terminal, the RedCap terminal can support a smaller terminal bandwidth. For example, in FR1, the terminal can only support a terminal bandwidth of 5MHz, 10MHz or 20MHz. For another example, in FR2, the terminal needs to support a maximum bandwidth of 400MHz. In order to reduce the cost of the RedCap terminal and reduce the power consumption of the RedCap terminal, the RedCap terminal can support a smaller terminal bandwidth, such as a bandwidth of 100 MHz.

In addition, the RedCap terminal may also have some other features, such as supporting a lower peak rate, supporting a looser processing delay, a larger processing delay, and the like.

In the NR system, both the system bandwidth and the terminal bandwidth may reach hundreds of MHz or even several GHz to support high-speed mobile data transmission. But in actual data transmission, such a large bandwidth is not required all the time. For example, in a working scenario that only needs to support low data rate transmission (such as social software chat), the terminal only needs to use a small working bandwidth, for example, a bandwidth of 10MHz is sufficient. In order to flexibly support different bandwidth requirements in the above-mentioned different scenarios, 5G introduces the concept of bandwidth part (BWP, bandwidth part). The bandwidth part can be a part of the system bandwidth (cell carrier bandwidth). For example, the system bandwidth is 100MHz, and the terminal can use a bandwidth of less than 100MHz, such as the bandwidth part of 20MHz and 50MHz to perform data transmission within the system bandwidth. For example, the NR terminal can be configured with a maximum of 4 BWPs by high-level signaling, and different BWPs can have different bandwidth sizes, different frequency positions, and different subcarrier spacings. The network can enable the terminal to switch between multiple BWPs according to the service requirements of the terminal. For example, when transmitting at a higher service rate, a BWP with a larger bandwidth is used, and when transmitting at a lower service data rate, a BWP with a smaller bandwidth is used. The BWP bandwidth configured by the network to the terminal needs to be less than or equal to the maximum bandwidth that the terminal can support.

The NR initial downlink (DL) BWP is determined as follows:

The process related to the initial access of the NR terminal is performed in the NR initial DL BWP. For example, the terminal reads system information, receives paging messages, receives the related downlink control channel PDCCH (physical downlink control channel) and data channel PDSCH (physical downlink shared channel) in the random access process, and the like. Before the initial access is completed, the terminal determines the initial DL BWP based on the RMSI (Remaining Minimum System Information) CORESET (control-resource set) (that is, the terminal monitors the PDCCH CORESET where the PDCCH scheduling the PDSCH carrying the RMSI is located). For example, the bandwidth size and bandwidth position of the initial DL BWP are completely consistent with the bandwidth size and bandwidth position occupied by the RMSI CORESET. The subcarrier spacing of the initial DL BWP is also exactly the same as that of the RMSI CORESET. The configuration information of RMSI CORESET is indicated in NR PBCH. It should be noted that the RMSI CORESET is also called CORESET 0 in the standard. The bandwidth size of the RMSI CORESET can be configured as 24, 48 or 96 PRBs (Physical Resource Block). As shown in FIG. 2, it is a schematic diagram of determining the initial DL BWP based on CORESET 0.

After the initial access is completed, optionally, the network device can configure signaling to the terminal with a new initial DL BWP, but the bandwidth of the new initial DL BWP needs to include the bandwidth of the initial DL BWP before the initial access is completed, and both of them has exactly the same subcarrier spacing.

The bandwidth supported by the RedCap terminal is relatively narrow. For example, the bandwidth of the RedCap terminal that FR1 may support is 10MHz, 20MHz, and so on. For FR1, 10MHz or 20MHz RedCap terminals can normally receive SS/PBCH Block (synchronization signal, broadcast channel block). This is because the SS/PBCH Block occupies 20 PRBs, and the subcarrier spacing of the FR1 SS/PBCH Block is 15KHz or 30KHz. Therefore, the maximum bandwidth occupied by the SS/PBCH Block is 20 (PRB)*12 (subcarriers)*30KHz=7.2MHz.

When the bandwidth of the RedCap terminal is 10 MHz, it may not be able to completely receive the control channel and the data channel for scheduling the RMSI. As shown in FIG. 3, the RedCap terminal bandwidth is smaller than that of CORESET 0. When the subcarrier spacing of the RMSI CORESET is 15KHz, the RMSI CORESET can be configured with a maximum of 96 PRBs; or, when the subcarrier spacing of the RMSI CORESET is 30KHz, the RMSI CORESET can be configured with a maximum of 48 PRBs. Therefore, the maximum possible bandwidth of RMSI CORESET is 96(PRB)*12(subcarrier)* 15KHz = 48(PRB)*12(subcarrier)*30KHz = 17.28MHz. When the bandwidth of the RedCap terminal is 20MHz, the control channel and data channel of scheduling RMSI can be completely received.

For another example, due to the need to reduce costs, the bandwidth of the RedCap terminal that FR2 may support is 50MHz and 100MHz. Similarly, when the bandwidth of the RedCap terminal is 100MHz, it can receive SS/PBCH Block (synchronization signal, broadcast channel block) normally. This is because the SS/PBCH Block occupies 20 PRBs, and the subcarrier spacing of the FR2 SS/PBCH Block is 120KHz or 240KHz, so the maximum bandwidth occupied by the SS/PBCH Block is 20 (PRB)*12(subcarrier)*240KHz= 57.6MHz. But when the bandwidth of the RedCap terminal is 50MHz, it cannot completely receive the SS/PBCH Block (synchronization signal, broadcast channel block).

In addition, when the bandwidth of the RedCap terminal is 50 MHz, it cannot completely receive the control channel and the data channel for scheduling the RMSI. This is because, when the subcarrier spacing of the RMSI CORESET is 60KHz, the RMSI CORESET can be configured as a maximum of 96 PRBs; or, when the subcarrier spacing of the RMSI CORESET is 120KHz, the RMSI CORESET can be configured as a maximum of 48 PRBs. Therefore, the maximum possible bandwidth of RMSI CORESET is 96(PRB)^{∗}12(subcarrier)^{∗}60KHz = 48(PRB)^{∗}12(subcarrier)^{∗}120KHz = 69.12MHz. When the bandwidth of the RedCap terminal is 100MHz, the control channel and data channel of scheduling RMSI can be completely received.

For terminals that cannot completely receive the control channel and data channel of the scheduling RMSI, other common channels during the initial access process, such as paging, RAR (Random Access Response), OSI (other system information), etc., because it is scheduled in the initial DL BWP determined by the bandwidth of the RMSI CORESET, if the terminal bandwidth is too narrow, the terminal may not be able to fully receive these channels.

The embodiment of the present application proposes a channel transmission method, which can be used for the transmission of public data channels, and can optimize the transmission of the aforementioned common channel to the terminal when the bandwidth of the terminal is smaller than the bandwidth of the RMSI CORESET.

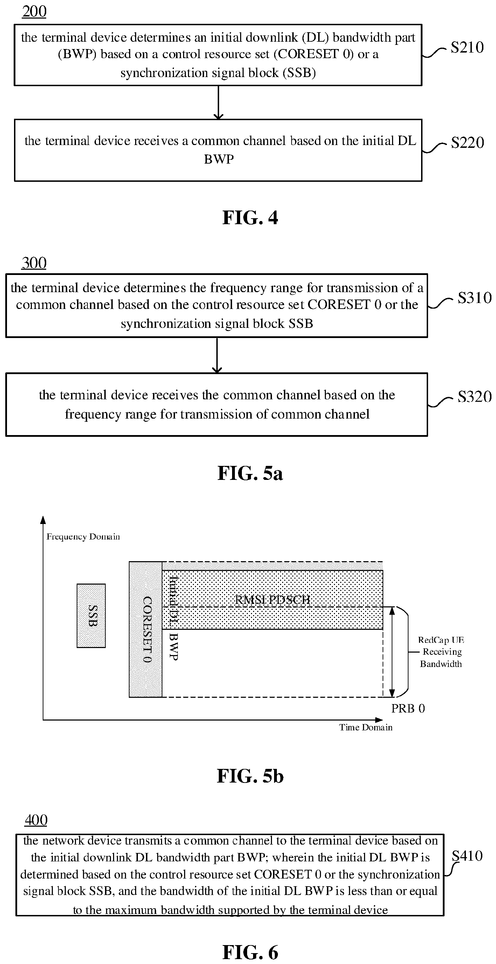

FIG. 4 is a schematic flowchart of a channel transmission method 200 according to an embodiment of the present application. The method can optionally be applied to the system shown in FIG. 1, but is not limited thereto. The method includes at least some of the following.

In S210, the terminal device determines an initial downlink (DL) bandwidth part (BWP) based on a control resource set (CORESET 0) or a synchronization signal block (SSB).

In S220, the terminal device receives a common channel based on the initial DL BWP; wherein, the bandwidth of the initial DL BWP is less than or equal to the maximum bandwidth supported by the terminal device.

Exemplarily, in 5G NR, CORESET includes a group of physical resource sets, consisting of multiple RBs in the frequency domain and 1, 2 or 3 OFDM symbols in the time domain. CORESET 0 is also known as RMSI CORESET. The configuration information of the RMSI CORESET can be indicated in the NR PBCH (Physical Broadcast Channel). The bandwidth size of RMSI CORESET can be configured as 24, 48 or 96 PRBs, for example.

Exemplarily, the SSB may also be called a synchronization signal and a PBCH block (Synchronization Signal and PBCH block).

Exemplarily, the common channel may include channels for transmitting paging, RAR, OSI, RMSI and so on. These common channels can be scheduled in the initial DL BWP of the terminal device. The initial DL BWP can be an initial DL BWP dedicated to the RedCap terminal, which is different from the initial DL BWP of the NR terminal.

Exemplarily, the terminal device may be a RedCap terminal, which can support medium transmission rate and medium delay requirements. The maximum bandwidth supported by the RedCap terminal is relatively narrow, such as 10MHz, 20MHz, and so on. The initial DL BWP determined by the RedCap terminal based on CORESET 0 or SSB is less than or equal to the maximum bandwidth supported by the RedCap terminal. For example, for a RedCap terminal supporting 10MHz, the maximum initial DL BWP bandwidth can be 52 PRB (subcarrier spacing is 15KHz) or 24 PRB (subcarrier spacing is 30KHz), and the like.

In this embodiment, the terminal device determines the initial DL of the terminal device based on CORESET 0 or SSB BWP, and makes the initial DL BWP less than or equal to the maximum bandwidth supported by the terminal device, and the terminal device can completely receive the common channel.

Optionally, in this embodiment of the present application, the maximum bandwidth supported by the terminal device is smaller than the bandwidth of CORESET 0.

Since the bandwidth of the initial DL BWP is less than or equal to the maximum bandwidth supported by the terminal device, the terminal device can completely receive the common channel scheduled in the bandwidth of the initial DL BWP.

Optionally, in this embodiment of the application, determining the initial DL BWP based on CORESET 0 or SSB includes: when the maximum bandwidth supported by the terminal device is less than the bandwidth of CORESET 0, the terminal device determines the initial DL BWP based on CORESET 0 or SSB.

Optionally, in this embodiment of the present application, the initial DL BWP is determined by at least one of the following frequency reference points: the initial DL BWP starting frequency; the initial DL BWP ending frequency; or the initial DL BWP center frequency.

For example, the bandwidth between the starting frequency point of the initial DL BWP and the ending frequency point of the initial DL BWP may be determined as the initial DL BWP.

For another example, according to the starting frequency point of the initial DL BWP, a segment of bandwidth started from the starting frequency point may be determined as the initial DL BWP. According to the ending frequency of the initial DL BWP, a segment of bandwidth ended at the ending frequency may be determined as the initial DL BWP. According to the center frequency point of the initial DL BWP, the bandwidth before and after the center frequency point can be determined as the initial DL BWP. For example, for a RedCap terminal that supports 10MHz, the above bandwidth can be 52 PRB (with a subcarrier spacing of 15KHz) or 24 PRB (with a subcarrier spacing of 30KHz).

Optionally, in this embodiment of the present application, the manner of determining the frequency reference point includes at least one of the following:
the starting frequency point of the initial DL BWP is the PRB with the lowest frequency of CORESET 0 or SSB, for example, the starting frequency point of the initial DL BWP is the subcarrier with the lowest frequency in the PRB with the lowest frequency;
the ending frequency point of the initial DL BWP is the PRB with the highest frequency of CORESET 0 or SSB, for example, the ending frequency point of the initial DL BWP is the subcarrier with the highest frequency in the PRB with the highest frequency; or
the center frequency point of the initial DL BWP is the center frequency point of CORESET 0 or SSB.

Optionally, in this embodiment of the present application, the frequency reference point is received from a network device or obtained by a protocol agreement.

Optionally, in this embodiment of the present application, the manner of carrying the frequency reference point includes at least one of the following: MIB (Master Information Block) in the PBCH; RMSI such as SIB (System Information Block) 1; or RRC (Radio Resource Control) dedicated signaling. For example, the terminal device receives the above-mentioned PBCH, RMSI or RRC dedicated signaling from the network device. The frequency reference point for determining the initial DL BWP is obtained from the PBCH, RMSI or RRC dedicated signaling. Then, an initial DL BWP is determined based on the frequency reference point.

Optionally, in this embodiment of the application, in the case that the frequency reference point is carried by RMSI, the bandwidth of the initial DL BWP is used to transmit at least one of the following information: other system information OSI, random access response RAR, or paging.

In this embodiment, CORESET 0 or SSB is used to determine the initial DL BWP of the terminal device, so that the terminal device can completely receive the common channels of the initial access process in its dedicated initial DL BWP, such as the PDCCH and or PDSCH of the messages of RMSI, OSI, paging, RAR, etc., thereby avoiding performance degradation. The method of determining the SSB frequency position further enables the terminal device to receive the SSB and its initial DL BWP at the same time, avoiding frequency hopping of the terminal.

FIG. 5a is a schematic flowchart of a channel transmission method 300 according to another embodiment of the present application. The method can optionally be applied to the system shown in FIG. 1, but is not limited thereto. The same terms in this embodiment and the method 200 have the same meanings, and details are not repeated here. The method includes at least some of the following.

In S310, the terminal device determines the frequency range for transmission of a common channel based on the control resource set CORESET 0 or the synchronization signal block SSB.

In S320, the terminal device receives the common channel based on the frequency range for transmission of the common channel.

Optionally, in this embodiment of the present application, the bandwidth corresponding to the frequency range for transmission of the common channel is less than or equal to the maximum bandwidth supported by the terminal device. In this way, the terminal device can completely receive the common channel in the frequency range for transmission of the common channel. In addition, if the bandwidth corresponding to the frequency range for transmission of the common channel is greater than the maximum bandwidth supported by the RedCap terminal, the RedCap terminal determines the frequency range for transmission of the common channel based on CORESET 0 or SSB, which is also beneficial for the RedCap terminal to accurately receive the common channel and avoid reception misalignment.

For example, as shown in FIG. 5b, a reception misalignment situation includes: the common channel is scheduled in the upper half of the traditional initial DL BWP, but the RedCap terminal receives in the lower half of the initial DL BWP. RedCap terminals can only receive a small part of the common channel.

For another example, the maximum bandwidth supported by the RedCap terminal is 10 MHz, and assuming that the frequency range for transmission of the common channel corresponds to a bandwidth of 20 MHz. If the RedCap terminal determines the frequency range for transmission of the common channel based on CORESET 0 or SSB, the starting frequency of common channel transmission can be obtained, and the RedCap terminal can start receiving the common channel from the starting frequency of common channel transmission. In this way, the bandwidth corresponding to the common channel received by the RedCap terminal is about 10 MHz. while in the case of misaligned reception, the bandwidth corresponding to the common channel received by the RedCap terminal may only be 2 MHz.

Optionally, in this embodiment of the present application, the maximum bandwidth supported by the terminal device is smaller than the bandwidth of CORESET 0.

Optionally, in this embodiment of the application, determining the frequency range for transmission of the common channel based on CORESET 0 or SSB includes:

In the case that the maximum bandwidth supported by the terminal device is less than the bandwidth of CORESET 0, the terminal device determines the frequency range for transmission of the common channel based on CORESET 0 or SSB.

Optionally, in this embodiment of the present application, the frequency range for transmission of the common channel includes the frequency range for transmission of a physical downlink shared channel PDSCH.

Optionally, in this embodiment of the application, the frequency range for transmission of the PDSCH is determined by at least one of the following frequency reference points: the starting frequency point of the frequency range for transmission of the PDSCH; the ending frequency point of the frequency range for transmission of the PDSCH; or the center frequency point of the frequency range for transmission of the PDSCH.

For example, the bandwidth between the starting frequency point and the ending frequency point of the frequency range for transmission of the PDSCH may be determined as the frequency range for transmission of the PDSCH. For another example, according to the starting frequency point of the frequency range for transmission of the PDSCH, a segment of bandwidth started from the starting frequency point may be determined as the frequency range for transmission of the PDSCH. According to the ending frequency point of the frequency range for transmission of the PDSCH, a segment of bandwidth ended at the ending frequency point can be determined as the frequency range for transmission of the PDSCH. According to the center frequency point of the frequency range for transmission of the PDSCH, the bandwidth before and after the center frequency point can be determined as the frequency range for transmission of the PDSCH. For example, for a 10MHz RedCap terminal, the above bandwidth can be 52 PRB (subcarrier spacing is 15KHz) or 24 PRB (subcarrier spacing is 30KHz).

Optionally, in this embodiment of the present application, the manner of determining the frequency reference point includes at least one of the following:

The starting frequency point of the frequency range for transmission of the PDSCH is the physical resource block PRB with the lowest frequency of the control resource set CORESET 0 or the synchronization signal block SSB. For example, the starting frequency point of the frequency range for transmission of the PDSCH is the subcarrier with the lowest frequency in the lowest frequency PRB.

The ending frequency point of the frequency range for transmission of the PDSCH is the PRB with the highest frequency of CORESET 0 or SSB, for example, the ending frequency point of the frequency range for transmission of the PDSCH is the subcarrier with the highest frequency in the highest frequency PRB.

The center frequency point of the frequency range for transmission of the PDSCH is the center frequency point of CORESET 0 or SSB.

Optionally, in this embodiment of the present application, the frequency reference point is received from a network device or obtained by a protocol agreement.

Optionally, in this embodiment of the present application, the manner of carrying the frequency reference point includes at least one of the following: a master information block MIB in a physical broadcast channel PBCH; remaining minimum system information RMSI; or a radio resource control RRC dedicated signaling.

Optionally, in addition to determining the frequency range for transmission of the PDSCH by indicating a frequency reference point, the frequency range for transmission of the PDSCH may also be determined by indicating a low frequency side or a high frequency side. Specifically, it may indicate that the frequency range of the PDSCH transmission is on the low frequency side or the high frequency side of the CORESET 0 or the initial DL BWP of the NR terminal. For example, if the frequency range indicated for PDSCH transmission is located on the low frequency side of CORESET 0, a bandwidth starting from the lower frequency PRB of CORESET 0 is used as the frequency range for transmission of the PDSCH. For another example, if the frequency range indicated for PDSCH transmission is on the high frequency side of the initial DL BWP of the NR terminal, a bandwidth ending at the PRB with a higher frequency of the initial DL BWP of the NR terminal is used as the frequency range for transmission of the PDSCH.

Optionally, in this embodiment of the present application, the PDSCH is scheduled within the frequency range for transmission of the PDSCH.

Optionally, in this embodiment of the present application, the PDSCH is used to carry at least one of the following information: RMSI, other system information OSI, random access response RAR, and paging. For example, the terminal device receives the above-mentioned PBCH, RMSI or RRC dedicated signaling from the network device. The frequency reference point used to determine the frequency range for transmission of the PDSCH is obtained from the PBCH, RMSI or RRC dedicated signaling. Then, the frequency range for transmission of the PDSCH is determined based on the frequency reference point.

Optionally, in this embodiment of the present application, the terminal device is a reduced capability (RedCap) terminal, and the PDCCHs received by the RedCap terminal and the new wireless NR terminal use different system information radio network temporary identifiers (SI-RNTI), use different scrambling codes for scrambling, or carry different downlink control indicators (DCI).

Optionally, in this embodiment of the present application, the terminal device is a RedCap terminal, and the RedCap terminal and the NR terminal share the PDCCH CORESET configuration.

In this embodiment, using the CORESET 0 or SSB to determine the frequency range for transmission of the common channel can enable the terminal device to completely receive the common channel and avoid loss of receiving performance. It is beneficial to align the common channel received by the terminal device with the frequency range for transmission of the common channel, and receive the common channel more accurately. In addition, by agreeing that the transmission frequency range of the terminal device is related to the position of the SSB, the terminal device can also completely receive the SSB at the same time. For example, if the center frequency point of the terminal device receiving bandwidth is the center frequency point of the SSB, the terminal device can completely receive the SSB and avoids frequency hopping of the terminal to receive the SSB.

FIG. 6 is a schematic flowchart of a channel transmission method 400 according to another embodiment of the present application. The method can optionally be applied to the system shown in FIG. 1, but is not limited thereto. The method includes at least some of the following.

In S410, the network device transmits a common channel to the terminal device based on the initial downlink DL bandwidth part BWP; wherein the initial DL BWP is determined based on the control resource set CORESET 0 or the synchronization signal block SSB, and the bandwidth of the initial DL BWP is less than or equal to the maximum bandwidth supported by the terminal device. For example, the network device can determine the initial DL BWP of a certain terminal device based on CORESET 0 or SSB, and then can transmit a common channel to the terminal device at the initial DL BWP. The terminal device may receive the common channel based on the initial DL BWP. Exemplarily, the terminal device may be a RedCap terminal.

Optionally, in this embodiment of the present application, the maximum bandwidth supported by the terminal device is smaller than the bandwidth of CORESET 0.

Optionally, in this embodiment of the present application, the initial DL BWP is determined by at least one of the following frequency reference points: a starting frequency point of the initial DL BWP; an ending frequency point of the initial DL BWP; or a center frequency point of the initial DL BWP.

Optionally, in this embodiment of the present application, the manner of determining the frequency reference point includes at least one of the following:
the starting frequency point of the initial DL BWP is the PRB with the lowest frequency of CORESET 0 or SSB;
the ending frequency of the initial DL BWP is the PRB with the highest frequency of CORESET 0 or SSB; or
the center frequency point of the initial DL BWP is the center frequency point of CORESET 0 or SSB.

Optionally, in this embodiment of the present application, the manner of carrying the frequency reference point includes at least one of the following: MIB in the PBCH; RMSI; or RRC dedicated signaling.

Optionally, in this embodiment of the application, in the case that the frequency reference point is carried by RMSI, the bandwidth of the initial DL BWP is used to transmit at least one of the following information: other system information OSI, random access response RAR, or paging.

For a specific example of the method 400 performed by the network device in this embodiment, reference may be made to the related descriptions about the network device such as the base station in the method 200 above, and details are not repeated here for brevity.

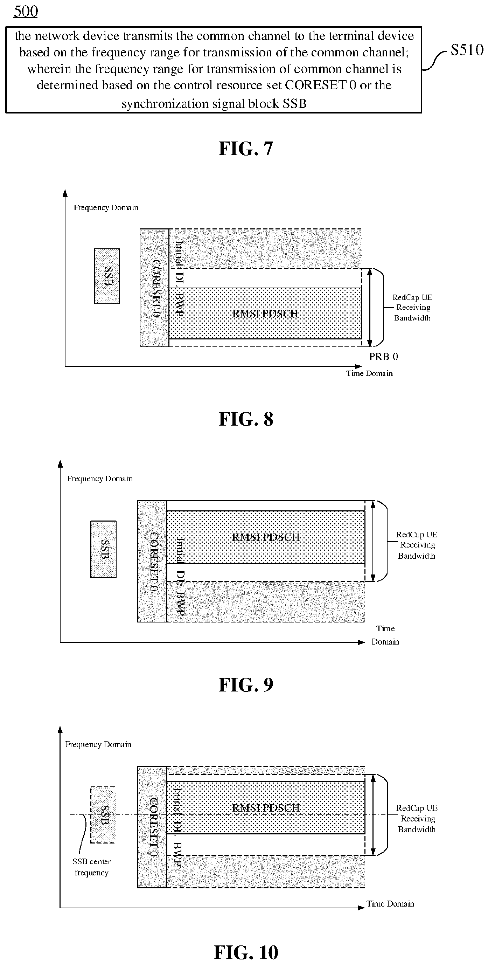

FIG. 7 is a schematic flowchart of a channel transmission method 500 according to another embodiment of the present application.

In S5 10, the network device transmits the common channel to the terminal device based on the frequency range for transmission of the common channel; wherein the frequency range for transmission of the common channel is determined based on the control resource set CORESET 0 or the synchronization signal block SSB.

Optionally, in this embodiment of the present application, the bandwidth corresponding to the frequency range for transmission of the common channel is less than or equal to the maximum bandwidth supported by the terminal device.

Optionally, in this embodiment of the present application, the maximum bandwidth supported by the terminal device is smaller than the bandwidth of CORESET 0.

Optionally, in this embodiment of the present application, the frequency range for transmission of the common channel includes the frequency range for transmission of a physical downlink shared channel PDSCH.

Optionally, in this embodiment of the application, the frequency range for transmission of the PDSCH is determined by at least one of the following frequency reference points: the starting frequency point of the frequency range for transmission of the PDSCH; the ending frequency point of the frequency range for transmission of the PDSCH; or the center frequency point of the frequency range for transmission of the PDSCH.

Optionally, in this embodiment of the present application, the manner of determining the frequency reference point includes at least one of the following:
the starting frequency point of the frequency range for transmission of the PDSCH is the physical resource block PRB with the lowest frequency of the control resource set CORESET 0 or the synchronization signal block SSB;
the ending frequency point of the frequency range for transmission of the PDSCH is the PRB with the highest frequency of CORESET 0 or SSB; or
the center frequency point of the frequency range for transmission of the PDSCH is the center frequency point of CORESET 0 or SSB.

Optionally, in this embodiment of the present application, the PDSCH is scheduled within the frequency range for transmission of the PDSCH.

Optionally, in this embodiment of the present application, the manner of carrying the frequency reference point includes at least one of the following: MIB in the PBCH; RMSI; or RRC dedicated signaling.

Optionally, in this embodiment of the present application, the PDSCH is used to carry at least one of the following information: RMSI, other system information OSI, random access response RAR, or paging.

For a specific example of the method 500 executed by the network device in this embodiment, reference may be made to relevant descriptions about the network device such as the base station in the above method 300, and details are not repeated here for brevity.

Hereinafter, the channel transmission method of the present application is illustrated by serval examples.

In this embodiment of the application, the frequency position of CORESET 0 or SSB can be based on to determine the frequency range of the PDCCH and/or PDSCH related to the common channel of the RedCap terminal; or to determine the initial DL BWP dedicated to the RedCap terminal. The receiving bandwidth or the bandwidth of the initial DL BWP is determined based on the bandwidth of the RedCap terminal. In this way, the terminal can completely receive related common channels.

A scheme is to resolve the problem of complete reception of related common channels by the UE. Taking FR1 as an example, when the bandwidth of the RedCap terminal is 10MHz and the bandwidth of the RMSI CORESET is 17.28MHz, although the bandwidth of the terminal cannot completely cover the bandwidth of the RMSI CORESET, the terminal can receive part of the bandwidth of the RMSI CORESET. For example, the terminal can choose to receive a part of the bandwidth of any part of the RMSI CORESET (for the 10MHz terminal bandwidth, excluding the guard bands on both sides of the 10MHz bandwidth, the actual receiving bandwidth will be less than 10MHz, for example, for the subcarrier spacing of 15KHz, the corresponding number of PRBs is 52). Since PDCCH adopts channel coding, it is possible to detect PDCCH correctly even if the terminal does not receive the full bandwidth of PDCCH CORESET, but due to the reduction in the number of receivable PDCCH REs (Resource Elements), the detection performance of PDCCH is reduced. Similarly, in the initial DL BWP determined based on the RMSI CORESET, the terminal may not be able to fully receive the bandwidth of the channels when receiving the RMSI PDSCH, RAR, or paging PDCCH or PDSCH, but the terminal can still achieve correct channel reception by receiving a portion of the bandwidth of the above channel.

However, relying on the implementation of the terminal is at the expense of the receiving performance of the terminal. Below are further examples of several optimizations:

### Example 1: The network notifies the frequency range of the RMSI PDSCH

An example of an optimized method includes that the network notifies the terminal or pre-arranges the frequency range of the channel to be received, such as the frequency receiving position. For example, for the reception of RMSI, the RMSI PDCCH is detected in the received part of the RMSI PDCCH CORESET bandwidth in the manner implemented by the aforementioned UE. But for RMSI PDSCH, information related to the frequency range of receiving RMSI PDSCH can be pre-agreed or notified by the network, such as the frequency starting point (or referred to as the starting frequency point) of RMSI PDSCH scheduling, the frequency ending point (or referred to as the ending frequency point) of RMSI PDSCH scheduling, or the frequency center frequency point (or referred to as the center frequency point) of the RMSI PDSCH scheduling.

For example, the RMSI PDSCH can be scheduled within a range of frequency bands starting from the starting point of the frequency (the bandwidth supported by the RedCap terminal, such as 10MHz), and the starting point of the frequency can be the PRB with the lowest frequency of CORESET 0 or SSB. FIG. 8 is a schematic diagram of determining the starting frequency point of the receiving bandwidth of the RedCap terminal. The frequency starting point may be the PRB with the lowest frequency in CORESET 0.

For another example, the RMSI PDSCH can also be scheduled within a frequency range ended at the end of the frequency (the bandwidth supported by the RedCap terminal, such as 10MHz), and the starting point of the frequency can be the PRB with the highest frequency of the CORESET 0 or SSB. As shown in the FIG. 9, which is a schematic diagram of determining the ending frequency point of the RedCap terminal receiving bandwidth, and the starting point of the frequency may be the PRB with the highest frequency in CORESET 0.

For another example, the frequency center frequency point of RMSI PDSCH scheduling may also be the center frequency point of CORESET 0 or SSB. As shown in FIG. 10, which is the schematic diagram of determining the center frequency point of the RedCap terminal receiving bandwidth, the frequency center frequency point for RMSI PDSCH scheduling may be the center frequency point of the SSB.

It should be pointed out here that the frequency starting point or frequency ending point is not necessarily the frequency starting point or frequency ending point of the actual transmission of the PDSCH, while it can be scheduling within the range of the frequency band started from the frequency starting point or within the range of the frequency band ended at the frequency ending point. The role of the frequency center frequency point for RMSI PDSCH scheduling may include: RMSI PDSCH scheduling can be performed within a frequency range with the frequency center frequency point for RMSI PDSCH scheduling as the center frequency point. The above-mentioned frequency range generally needs to be smaller than the bandwidth that the RedCap terminal can support.

It should be pointed out that the RMSI PDSCH can be sent specifically for RedCap terminals (that is, the dedicated RMSI PDSCH is sent separately for RedCap UE; in addition, the RMSI PDSCH is also sent for NR terminals), or it can be shared by the NR terminal and the RedCap terminal. In the former case, since the RedCap terminal and the traditional NR terminal both receive PDCCH scheduling RMSI in the same RMSI CORESET, but the RMSI PDSCHs of the two are different, therefore, the PDCCH scheduling RMSI sent to the RedCap terminal and the traditional NR terminals needs to be distinguished. Specifically, the PDCCHs of the two can use different SI-RNTIs (for the PDCCH of the RedCap terminal, use a second SI-RNTI different from the existing SI-RNTI, denoted as SI-RNTI_2); or different scrambling codes for scrambling; or use a bit of DCI to indicate (for example, if the value of this bit is 0, it is the PDCCH for NR terminals; and if the value of this bit is 1, it is the PDCCH for RedCap terminals), this bit can be a reserved bit in the existing PDCCH DCI for scheduling the RMSI.

Since the RMSI carries SIB1, the PDCCH CORESET related to other common channels such as OSI, paging, and RAR can be configured in the SIB, so it can be guaranteed that the PDCCH CORESET of these common channels does not exceed the bandwidth supported by the RedCap terminal (such as 10MHz).

In this example, by notifying or pre-agreeing information about the frequency range of RMSI PDSCH, and limiting the bandwidth of RMSI PDSCH to be less than or equal to the bandwidth supported by RedCap terminals, the terminal can completely receive RMSI PDSCH, thereby avoiding the loss of receiving performance. In addition, it is stipulated that the receiving position of the terminal is related to the position of the SSB, and the terminal can also completely receive the SSB at the same time, thereby avoiding the frequency hopping for receiving SSB.

### Example 2: The network notifies the frequency range of PDSCH for RMSI, OSI, RAR, paging

This example is similar to Example 1. During the initial access process, the frequency range information of the PDSCH carrying RMSI, OSI, RAR, paging, etc. can be notified by the network to the terminal or pre-arranged in a manner similar to Example 1. The frequency ranges of these channels may be the same or different; or different for different terminals, but the same for the same terminal. For example, the RedCap terminals in the cell may be classified into several groups, and different frequency ranges are notified to different groups.

The PDCCH for scheduling RMSI, OSI, RAR, and paging can also be received in the manner implemented by the aforementioned terminal. In this way, the RedCap terminal and the NR terminal can share the configuration of the relevant PDCCH CORESET, thereby saving network signaling.

### Example 3: RedCap UE-specific initial DL BWP

For NR terminals, the initial DL BWP is determined by the bandwidth size of the RMSI CORESET and its location. For a Redcap UE with a small bandwidth (such as 10MHz), directly using the initial DL BWP determined by the RMSI CORESET will cause the problem that the common channel cannot be completely received. Therefore, an example of another method includes: the RedCap terminal uses its dedicated initial DL BWP. The initial DL BWP dedicated to RedCap is also determined by the frequency position of the RMSI CORESET or the frequency position of the SSB.

The starting point or ending point or center frequency point of the frequency position of the initial DL BWP dedicated to the RedCap terminal can be pre-agreed, or notified by the network. The starting point, ending point or center frequency point of the frequency position of the initial DL BWP dedicated to RedCap terminals is an agreed frequency position in RMSI CORESET or SSB.

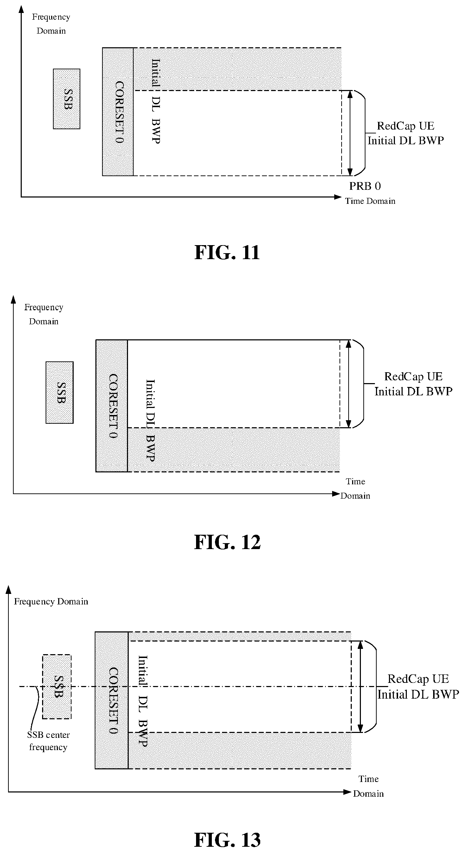

For example, the starting point of the frequency position of the initial DL BWP dedicated to the RedCap terminal is the PRB with the lowest frequency position of the RMSI CORESET or SSB. FIG. 11 shows a schematic diagram of determining the initial DL BWP of a RedCap terminal based on the initial PRB of CORESET 0. The starting point of the frequency position of the initial DL BWP dedicated to the RedCap terminal can be PRB 0 (initial PRB) of RMSI CORESET.

For another example, the end point of the frequency position of the initial DL BWP dedicated to the RedCap terminal is the PRB with the highest frequency position of the RMSI CORESET or SSB. FIG. 12 is a schematic diagram of determining the initial DL BWP of the RedCap terminal based on the ending PRB of CORESET 0. The ending point of the frequency position of the initial DL BWP dedicated to the RedCap terminal can be the ending frequency of the RMSI CORESET.

For another example, the center frequency point of the frequency position of the initial DL BWP dedicated to the RedCap terminal is the center frequency point of the RMSI CORESET or SSB. FIG. 13 is a schematic diagram of determining the initial DL BWP of the RedCap terminal based on the SSB center frequency point. The center frequency point of the frequency position of the initial DL BWP dedicated to the RedCap terminal may be the center frequency point of the SSB.

In the case of network notification, it can be notified in PBCH (MIB) or in RMSI (SIB1).

The bandwidth of the initial DL BWP dedicated to the RedCap terminal may be preset or notified by the network. For example, the bandwidth of the initial DL BWP is smaller than the bandwidth supported by the RedCap terminal, for a 10MHz RedCap UE, the maximum bandwidth of the initial DL BWP is 52 PRB (subcarrier spacing is 15KHz) or 24 PRB (subcarrier spacing is 30KHz). In the case of network notification, it can be notified in PBCH (MIB) or in RMSI (SIB 1). In the case of notification and relevant configuration information is notified in RMSI (SIB 1), the RedCap-specific initial DL BWP is used for reception of OSI, RAR, paging, etc., but not for reception of RMSI.

In this example, CORESET 0 or SSB is used to determine the initial DL BWP dedicated to the RedCap UE, so that the RedCap terminal can completely receive the PDCCH and/or PDSCH of the RMSI, OSI, paging, RAR and other messages of the initial access process in its dedicated initial DL BWP, thereby avoiding the performance degradation caused by the existing method. The method of determining the SSB frequency position further enables the terminal to receive the SSB and its initial DL BWP at the same time, avoiding frequency hopping of the terminal.

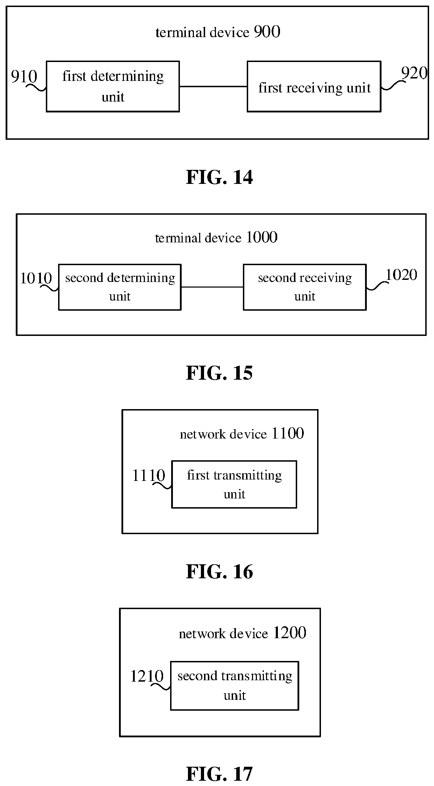

FIG. 14 is a schematic block diagram of a terminal device 900 according to an embodiment of the present application. The terminal device 900 may include:
a first determining unit 910, configured to determine an initial downlink DL bandwidth part BWP based on a control resource set CORESET 0 or a synchronization signal block SSB; and
a first receiving unit 920, configured to receive a common channel based on the initial DL BWP;
wherein, a bandwidth of the initial DL BWP is less than or equal to a maximum bandwidth supported by the terminal device.

Optionally, in this embodiment of the present application, the maximum bandwidth supported by the terminal device is smaller than a bandwidth of the CORESET 0.

Optionally, in this embodiment of the present application, first determining unit is further configured to: in a case that the maximum bandwidth supported by the terminal device is smaller than a bandwidth of CORESET 0, determine, by the terminal device, the initial DL BWP based on the CORESET 0 or the SSB.

Optionally, in this embodiment of the present application, the initial DL BWP is determined by at least one of following frequency reference point: a starting frequency of the initial DL BWP; an ending frequency of the initial DL BWP; or a center frequency point of the initial DL BWP.

Optionally, in this embodiment of the present application, the frequency reference point is determined according to at least one of:
the starting frequency point of the initial DL BWP is a PRB with lowest frequency of the CORESET 0 or the SSB;
the ending frequency point of the initial DL BWP is a PRB with highest frequency of the CORESET 0 or the SSB; or
the center frequency point of the initial DL BWP is a center frequency point of the CORESET 0 or the SSB.

Optionally, in this embodiment of the present application, the frequency reference point is received from a network device or obtained by a protocol agreement.

Optionally, in this embodiment of the present application,

Optionally, in this embodiment of the present application, the frequency reference point is carried by at least one of: MIB in the PBCH; RMSI; or RRC dedicated signaling.

Optionally, in this embodiment of the application, in the case that the frequency reference point is carried by the RMSI, the bandwidth of the initial DL BWP is used to transmit at least one of following information: other system information OSI, random access response RAR, or paging.

Exemplarily, the terminal device may be a RedCap terminal.

The terminal device 900 in the embodiment of the present application can implement the corresponding functions of the terminal device in the foregoing method embodiments. The processes, functions, implementations and beneficial effects corresponding to each module (submodule, unit or component, etc.) in the terminal device 900 can refer to the corresponding description in the above method embodiment, and details are not repeated here. It should be noted that the functions described by the modules (submodules, units or components, etc.) in the terminal device 900 of the embodiment of the application can be realized by different modules (submodules, units or components, etc.), or by one same module (submodule, unit or component, etc.).

FIG. 15 is a schematic block diagram of a terminal device 1000 according to another embodiment of the present application. The terminal device 1000 may include:
a second determining unit 1010, configured to determine a frequency range for transmission of a common channel based on a control resource set CORESET 0 or a synchronization signal block SSB; and
a second receiving unit 1020, configured to receive the common channel based on the frequency range for transmission of the common channel.

Optionally, a bandwidth corresponding to the frequency range for transmission of the common channel is less than or equal to a maximum bandwidth supported by the terminal device.

Optionally, in this embodiment of the present application, a maximum bandwidth supported by the terminal device is smaller than a bandwidth of the CORESET 0.

Optionally, in this embodiment of the present application, the second determining unit 1010 is further configured to: in a case that a maximum bandwidth supported by the terminal device is less than a bandwidth of the CORESET 0, determine the frequency range for transmission of the common channel based on the CORESET 0 or the SSB.

Optionally, in this embodiment of the present application, the frequency range for transmission of the common channel includes a frequency range for transmission of a physical downlink shared channel PDSCH.

Optionally, in this embodiment of the application, the frequency range for transmission of the PDSCH is determined by at least one of following frequency reference point: a starting frequency point of the frequency range for transmission of the PDSCH; an ending frequency point of the frequency range for transmission of the PDSCH; or a center frequency point of the frequency range for transmission of the PDSCH.

Optionally, in the embodiment of the present application, the frequency reference point is determined according to at least one of:
the starting frequency point of the frequency range for transmission of the PDSCH is a physical resource block PRB with lowest frequency of the control resource set CORESET 0 or the synchronization signal block SSB;
the ending frequency point of the frequency range for transmission of the PDSCH is a PRB with highest frequency of the CORESET 0 or the SSB; or
the center frequency point of the frequency range for transmission of the PDSCH is a center frequency point of the CORESET 0 or the SSB.

Optionally, in this embodiment of the present application, the frequency reference point is received from a network device or obtained by a protocol agreement.

Optionally, in this embodiment of the present application, the frequency reference point is carried by at least one of: MIB in the PBCH; RMSI; or RRC dedicated signaling.

Optionally, in this embodiment of the present application, the PDSCH is scheduled within the frequency range for transmission of the PDSCH.

Optionally, in this embodiment of the present application, the PDSCH is used to carry at least one of the following information: RMSI, other system information OSI, random access response RAR, or paging.

Optionally, in this embodiment of the application, the terminal device is a RedCap terminal, and the PDCCH received by the RedCap terminal and the PDCCH received by a new wireless NR terminal use different system information radio network temporary identifiers SI-RNTIs, use different scrambling codes for scrambling, or carry different downlink control indicators DCIs.

Optionally, the terminal device is a RedCap terminal, and the RedCap terminal shares PDCCH CORESET configuration with a NR terminal.

The terminal device 1000 in the embodiment of the present application can implement the corresponding functions of the terminal device in the foregoing method embodiments. The processes, functions, implementations, and beneficial effects corresponding to each module (submodule, unit, or component, etc.) in the terminal device 1000 can refer to the corresponding descriptions in the above method embodiments, and details are not repeated here. It should be noted that the functions described by the modules (submodules, units or components, etc.) in the terminal device 1000 of the embodiment of the application can be realized by different modules (submodules, units or components, etc.), or by one same Module (submodule, unit or component, etc.).

FIG. 16 is a schematic block diagram of a network device 1100 according to an embodiment of the present application. The network device 1100 may include:
a first transmitting unit 1110, configured to transmit a common channel to a terminal device based on an initial downlink DL bandwidth part BWP; wherein, the initial DL BWP is determined based on a control resource set CORESET 0 or a synchronization signal block SSB, and a bandwidth of the initial DL BWP is less than or equal to a maximum bandwidth supported by the terminal device. Exemplarily, the terminal device may be a RedCap terminal.

Optionally, in this embodiment of the present application, the maximum bandwidth supported by the terminal device is smaller than a bandwidth of the CORESET 0.

Optionally, in this embodiment of the present application, the initial DL BWP is determined by at least one of following frequency reference point: a starting frequency of the initial DL BWP; an ending frequency of the initial DL BWP; or a center frequency point of the initial DL BWP.

Optionally, in the embodiment of the present application, the frequency reference point is determined according to at least one of:
the starting frequency point of the initial DL BWP is a PRB with lowest frequency of the CORESET 0 or the SSB;
the ending frequency point of the initial DL BWP is a PRB with highest frequency of the CORESET 0 or the SSB; or
the center frequency point of the initial DL BWP is a center frequency point of the CORESET 0 or the SSB.

Optionally, the frequency reference point is carried by at least one of: MIB in the PBCH; RMSI; or RRC dedicated signaling.

Optionally, in this embodiment of the present application, when the frequency reference point is carried by RMSI, the bandwidth of the initial DL BWP is used to transmit at least one of the following information: other system information OSI, random access response RAR, or paging.

The network device 1100 in the embodiment of the present application can implement the corresponding functions of the network device in the foregoing method embodiments. The procedures, functions, implementations, and beneficial effects corresponding to each module (submodule, unit, or component) in the network device 1100 can refer to the corresponding description in the above method embodiments, and details are not repeated here. It should be noted that the functions described by the various modules (submodules, units or components, etc.) in the network device 1100 of the application embodiment can be realized by different modules (submodules, units or components, etc.), or by one same module (submodule, unit or component, etc.).

FIG. 17 is a schematic block diagram of a network device 1200 according to another embodiment of the present application. The network device 1200 may include:
a second transmitting unit 1210, configured to transmit a common channel to a terminal device based on a frequency range for transmission of the common channel; wherein, the frequency range for transmission of the common channel is determined based on a control resource set CORESET 0 or a synchronization signal block SSB. Exemplarily, the terminal device may be a RedCap terminal.

Optionally, in this embodiment of the present application, a bandwidth corresponding to the frequency range for transmission of the common channel is less than or equal to a maximum bandwidth supported by the terminal device.

Optionally, in this embodiment of the present application, the maximum bandwidth supported by the terminal device is smaller than the bandwidth of CORESET 0.

Optionally, in this embodiment of the present application, the frequency range for transmission of the common channel includes a frequency range for transmission of a physical downlink shared channel PDSCH.

Optionally, in this embodiment of the application, the frequency range for transmission of the PDSCH is determined by at least one of following frequency reference point: a starting frequency point of the frequency range for transmission of the PDSCH; an ending frequency point of the frequency range for transmission of the PDSCH; or a center frequency point of the frequency range for transmission of the PDSCH.

Optionally, in the embodiment of the present application, the frequency reference point is determined according to at least one of:
the starting frequency point of the frequency range for transmission of the PDSCH is a physical resource block PRB with lowest frequency of the control resource set CORESET 0 or the synchronization signal block SSB;
the ending frequency point of the frequency range for transmission of the PDSCH is a PRB with highest frequency of the CORESET 0 or the SSB; or
the center frequency point of the frequency range for transmission of the PDSCH is a center frequency point of the CORESET 0 or the SSB.

Optionally, in the embodiment of the present application, the PDSCH is secluded within the frequency range for transmission of the PDSCH.

Optionally, the frequency reference point is carried by at least one of: MIB in the PBCH; RMSI; or RRC dedicated signaling.

Optionally, in this embodiment of the present application, the PDSCH is used to carry at least one of the following information: RMSI, other system information OSI, random access response RAR, or paging.

The network device 1200 in the embodiment of the present application can implement the corresponding functions of the network device in the foregoing method embodiments. The processes, functions, implementations, and beneficial effects corresponding to each module (submodule, unit, or component) in the network device 1200 can refer to the corresponding descriptions in the above method embodiments, and details are not repeated here. It should be noted that the functions described by the various modules (submodules, units or components, etc.) in the network device 1200 of the application embodiment can be realized by different modules (submodules, units or components, etc.), or by one same module (submodule, unit or component, etc.).

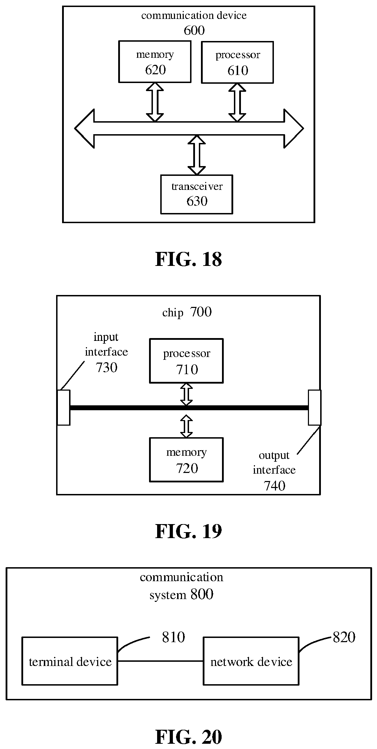

FIG. 18 is a schematic structural diagram of a communication device 600 according to an embodiment of the present application. The communication device 600 includes a processor 610, and the processor 610 can invoke and run a computer program from a memory, so that the communication device 600 implements the method in the embodiment of the present application.

Optionally, as shown in FIG. 18, the communication device 600 may further include a memory 620. Wherein, the processor 610 may call and run a computer program from the memory 620, so that the communication device 600 implements the method in the embodiment of the present application. Wherein, the memory 620 may be an independent device independent of the processor 610, or may be integrated in the processor 610.

Optionally, as shown in FIG. 18, the communication device 600 may further include a transceiver 630, and the processor 610 may control the transceiver 630 to communicate with other devices, specifically, to send information or data to other devices, or receive information or data sent by other devices. Wherein, the transceiver 630 may include a transmitter and a receiver. The transceiver 630 may further include antenna(s), and the number of antenna(s) may be one or more.

Optionally, the communication device 600 may be the network device of the embodiment of the present application, and the communication device 600 may implement the corresponding processes implemented by the network device in the methods of the embodiment of the present application. For the sake of brevity, details are not repeated here.

Optionally, the communication device 600 may be the terminal device of the embodiment of the present application, and the communication device 600 may implement the corresponding processes implemented by the terminal device in the methods of the embodiment of the present application. For the sake of brevity, details are not repeated here.

FIG. 19 is a schematic structural diagram of a chip 700 according to an embodiment of the present application. The chip 700 includes a processor 710, and the processor 710 can invoke and run a computer program from a memory, so as to implement the method in the embodiment of the present application.

Optionally, as shown in FIG. 19, the chip 700 may further include a memory 720. Wherein, the processor 710 may invoke and run a computer program from the memory 720, so as to implement the method performed by the terminal device or the network device in the embodiment of the present application. Wherein, the memory 720 may be an independent device independent of the processor 710, or may be integrated in the processor 710.

Optionally, the chip 700 may also include an input interface 730. Wherein, the processor 710 can control the input interface 730 to communicate with other devices or chips, specifically, can obtain information or data sent by other devices or chips.

Optionally, the chip 700 may also include an output interface 740. Wherein, the processor 710 can control the output interface 740 to communicate with other devices or chips, specifically, can output information or data to other devices or chips.

Optionally, the chip can be applied to the network device in the embodiment of the present application, and the chip can implement the corresponding processes implemented by the network device in the methods of the embodiment of the present application. For the sake of brevity, details are not repeated here.

Optionally, the chip can be applied to the terminal device in the embodiments of the present application, and the chip can implement the corresponding processes implemented by the terminal device in the methods of the embodiments of the present application. For the sake of brevity, details are not repeated here.

Chips applied to network devices and terminal devices may be the same chip or different chips.

It should be understood that the chip mentioned in the embodiment of the present application may also be called a system-level-chip, a system chip, a chip system, or a system-on-chip.

The processor mentioned above can be a general-purpose processor, a digital signal processor (DSP), a field programmable gate array (FPGA), an application specific integrated circuit (ASIC) or other programmable logic devices, transistor logic devices, discrete hardware components, or the like. The general-purpose processor mentioned above may be a microprocessor or any conventional processor or the like.

The aforementioned memories may be volatile memories or nonvolatile memories, or may include both volatile and nonvolatile memories. The non-volatile memory can be read-only memory (ROM), programmable read-only memory (programmable ROM, PROM), erasable programmable read-only memory (erasable PROM, EPROM), electrically programmable erasable programmable read-only memory (electrically EPROM, EEPROM) or flash memory. The volatile memory may be random access memory (RAM).

It should be understood that the above-mentioned memory is illustrative but not restrictive. For example, the memory in the embodiment of the present application may also be static random access memory (static RAM, SRAM), dynamic random access memory (dynamic RAM, DRAM), synchronous dynamic random access memory (synchronous DRAM, SDRAM), double data rate synchronous dynamic random access memory (double data rate SDRAM, DDR SDRAM), enhanced synchronous dynamic random access memory (enhanced SDRAM, ESDRAM), synch link dynamic random access memory (synch link DRAM, SLDRAM) and direct Rambus random access memory (Direct Rambus RAM, DR RAM), or the like. That is, the memory in the embodiments of the present application is intended to include, but not be limited to, these and any other suitable types of memory.

FIG. 20 is a schematic block diagram of a communication system 800 according to an embodiment of the present application. The communication system 800 includes a terminal device 810 and a network device 820. In a possible implementation manner, the terminal device 810 is configured to determine the initial downlink DL bandwidth part BWP based on the control resource set CORESET 0 or the synchronization signal block SSB; and receive the common channel based on the initial DL BWP; wherein, the bandwidth of the initial DL BWP is less than or equal to the maximum bandwidth supported by the terminal device. The network device 820 is configured to send a common channel to the terminal device based on the initial downlink DL bandwidth part BWP; wherein, the initial DL BWP is determined based on the control resource set CORESET 0 or the synchronization signal block SSB, and the bandwidth of the initial DL BWP is less than or equal to the maximum bandwidth supported by the terminal device.

In a possible implementation manner, the terminal device 810 is configured to determine the frequency range for transmission of a common channel based on the control resource set CORESET 0 or the synchronization signal block SSB; and receive the common channel based on the frequency range for transmission of the common channel. The network device 820 is configured to send the common channel to the terminal device based on the frequency range for transmission of the common channel; wherein, the frequency range for transmission of the common channel is determined based on the control resource set CORESET 0 or the synchronization signal block SSB.

The terminal device 810 may be used to realize corresponding functions realized by the terminal device in the above method, and the network device 820 may be used to realize corresponding functions realized by the network device in the above method. For the sake of brevity, details are not repeated here.

In the above embodiments, all or part of them may be implemented by software, hardware, firmware or any combination thereof. When implemented using software, it may be implemented in whole or in part in the form of a computer program product. The computer program product includes one or more computer instructions. When the computer program instructions are loaded and executed on the computer, the processes or functions according to the embodiments of the present application will be generated in whole or in part. The computer can be a general purpose computer, a special purpose computer, a computer network, or other programmable device. The computer instructions may be stored in or transmitted from one computer-readable storage medium to another computer-readable storage medium, for example, the computer instructions may be transferred from a website, computer, server, or data center by wire (such as coaxial cable, optical fiber, digital subscriber line (DSL)) or wireless (such as infrared, wireless, microwave, etc.) to another website site, computer, server or data center. The computer-readable storage medium may be any available medium that can be accessed by a computer, or a data storage device such as a server or a data center integrated with one or more available media. The available medium may be a magnetic medium (such as a floppy disk, a hard disk, or a magnetic tape), an optical medium (such as a DVD), or a semiconductor medium (such as a solid state disk (SSD)), etc.

It should be understood that, in various embodiments of the present application, the sequence numbers of the above-mentioned processes do not mean the order of execution, and the execution order of the processes should be determined by their functions and internal logic, and should not constitute any limitation to the implementation of the embodiments of the present application.

Those skilled in the art can clearly understand that for the convenience and brevity of the description, the specific operating process of the above-described system, device and unit can refer to the corresponding process in the foregoing method embodiment, which will not be repeated here.

The above is only the specific implementation of the application, but the scope of protection of the application is not limited thereto. Any change or substitution within the technical scope disclosed in the application that is readily conceivable to those familiar with the technical field should be covered within the scope of protection of this application. Therefore, the protection scope of the present application should be based on the protection scope of the claims.

## Claims

1. A channel transmission method, comprising:
determining, by a terminal device, an initial downlink DL bandwidth part BWP based on a control resource set CORESET 0 or a synchronization signal block SSB; and
receiving, by the terminal device, a common channel based on the initial DL BWP;
wherein, a bandwidth of the initial DL BWP is less than or equal to a maximum bandwidth supported by the terminal device.

2. The method according to claim 1, wherein the maximum bandwidth supported by the terminal device is smaller than a bandwidth of the CORESET 0.

3. The method according to claim 1 or 2, wherein determining the initial DL BWP based on the CORESET 0 or the SSB comprises:
in a case that the maximum bandwidth supported by the terminal device is smaller than a bandwidth of CORESET 0, determining, by the terminal device, the initial DL BWP based on the CORESET 0 or the SSB.

4. The method according to any one of claims 1 to 3, the initial DL BWP is determined by at least one of following frequency reference point:
a starting frequency of the initial DL BWP;
an ending frequency of the initial DL BWP; or
a center frequency point of the initial DL BWP.

5. The method according to claim 4, wherein the frequency reference point is determined according to at least one of:
the starting frequency point of the initial DL BWP is a PRB with lowest frequency of the CORESET 0 or the SSB;
the ending frequency point of the initial DL BWP is a PRB with highest frequency of the CORESET 0 or the SSB; or
the center frequency point of the initial DL BWP is a center frequency point of the CORESET 0 or the SSB.

6. The method according to claim 4 or 5, wherein the frequency reference point is received from a network device or obtained by a protocol agreement.

7. The method according to any one of claims 4 to 6, wherein the frequency reference point is carried by at least one of:
a master information block MIB in a physical broadcast channel PBCH;
remaining minimum system information RMSI; or
a radio resource control RRC dedicated signaling.

8. The method according to claim 7, wherein, in a case that the frequency reference point is carried by the RMSI, the bandwidth of the initial DL BWP is used to transmit at least one of following information:
other system information OSI, random access response RAR, or paging.

9. A channel transmission method, comprising:
determining, by a terminal device, a frequency range for transmission of a common channel based on a control resource set CORESET 0 or a synchronization signal block SSB; and
receiving, by the terminal device, the common channel based on the frequency range for transmission of the common channel.

10. The method according to claim 9, wherein a bandwidth corresponding to the frequency range for transmission of the common channel is less than or equal to a maximum bandwidth supported by the terminal device.

11. The method according to claim 9 or 10, wherein a maximum bandwidth supported by the terminal device is smaller than a bandwidth of the CORESET 0.

12. The method according to any one of claims 9 to 11, wherein, determining the frequency range for transmission of the common channel based on the CORESET 0 or the SSB, comprises:
in a case that a maximum bandwidth supported by the terminal device is less than a bandwidth of the CORESET 0, determining, by the terminal device, the frequency range for transmission of the common channel based on the CORESET 0 or the SSB.

13. The method according to any one of claims 9 to 11, wherein the frequency range for transmission of the common channel comprises a frequency range for transmission of a physical downlink shared channel PDSCH.

14. The method according to claim 13, wherein the frequency range for transmission of the PDSCH is determined by at least one of following frequency reference point:
a starting frequency point of the frequency range for transmission of the PDSCH;
an ending frequency point of the frequency range for transmission of the PDSCH; or
a center frequency point of the frequency range for transmission of the PDSCH.

15. The method according to claim 14, wherein the frequency reference point is determined according to at least one of:
the starting frequency point of the frequency range for transmission of the PDSCH is a physical resource block PRB with lowest frequency of the control resource set CORESET 0 or the synchronization signal block SSB;
the ending frequency point of the frequency range for transmission of the PDSCH is a PRB with highest frequency of the CORESET 0 or the SSB; or
the center frequency point of the frequency range for transmission of the PDSCH is a center frequency point of the CORESET 0 or the SSB.

16. The method according to claim 14 or 15, wherein the frequency reference point is received from a network device or obtained by a protocol agreement.

17. The method according to any one of claims 14 to 16, wherein the frequency reference point is carried by at least one of:
a master information block MIB in a physical broadcast channel PBCH;
remaining minimum system information RMSI; or
a radio resource control RRC dedicated signaling.

18. The method according to any one of claims 13 to 15, wherein the PDSCH is scheduled within the frequency range for transmission of the PDSCH.

19. The method according to any one of claims 13 to 18, wherein the PDSCH is used to carry at least one of following information:
RMSI, other system information OSI, random access response RAR, or paging.

20. The method according to any one of claims 9 to 19, wherein the terminal device is a RedCap terminal with reduced capabilities, and the PDCCH received by the RedCap terminal and the PDCCH received by a new wireless NR terminal use different system information radio network temporary identifiers SI-RNTIs, use different scrambling codes for scrambling, or carry different downlink control indicators DCIs.

21. The method according to any one of claims 9 to 20, wherein the terminal device is a RedCap terminal, and the RedCap terminal shares PDCCH CORESET configuration with a NR terminal.

22. A channel transmission method, comprising:
transmitting, by a network device, a common channel to a terminal device based on an initial downlink DL bandwidth part BWP;
wherein, the initial DL BWP is determined based on a control resource set CORESET 0 or a synchronization signal block SSB, and a bandwidth of the initial DL BWP is less than or equal to a maximum bandwidth supported by the terminal device.

23. The method according to claim 22, wherein the maximum bandwidth supported by the terminal device is smaller than a bandwidth of the CORESET 0.

24. The method according to claim 22 or 23, the initial DL BWP is determined by at least one of following frequency reference point:
a starting frequency of the initial DL BWP;
an ending frequency of the initial DL BWP; or
a center frequency point of the initial DL BWP.

25. The method according to claim 24, wherein the frequency reference point is determined according to at least one of:
the starting frequency point of the initial DL BWP is a PRB with lowest frequency of the CORESET 0 or the SSB;
the ending frequency point of the initial DL BWP is a PRB with highest frequency of the CORESET 0 or the SSB; or
the center frequency point of the initial DL BWP is a center frequency point of the CORESET 0 or the SSB.

26. The method according to claim 25, wherein the frequency reference point is carried by at least one of:
a master information block MIB in a physical broadcast channel PBCH;
remaining minimum system information RMSI; or
a radio resource control RRC dedicated signaling.

27. The method according to claim 26, wherein, in a case that the frequency reference point is carried by the RMSI, the bandwidth of the initial DL BWP is used to transmit at least one of following information:
other system information OSI, random access response RAR, or paging.

28. A channel transmission method, comprising:
transmitting, by a network device, a common channel to a terminal device based on a frequency range for transmission of the common channel;
wherein, the frequency range for transmission of the common channel is determined based on a control resource set CORESET 0 or a synchronization signal block SSB.

29. The method according to claim 28, wherein a bandwidth corresponding to the frequency range for transmission of the common channel is less than or equal to a maximum bandwidth supported by the terminal device.

30. The method according to claim 28 or 29, wherein a maximum bandwidth supported by the terminal device is smaller than a bandwidth of the CORESET 0.

31. The method according to any one of claims 28 to 30, wherein the frequency range for transmission of the common channel comprises a frequency range for transmission of a physical downlink shared channel PDSCH.

32. The method according to claim 31, wherein the frequency range for transmission of the PDSCH is determined by at least one of following frequency reference point:
a starting frequency point of the frequency range for transmission of the PDSCH;
an ending frequency point of the frequency range for transmission of the PDSCH; or
a center frequency point of the frequency range for transmission of the PDSCH.

33. The method according to claim 32, wherein the frequency reference point is determined according to at least one of:
the starting frequency point of the frequency range for transmission of the PDSCH is a physical resource block PRB with lowest frequency of the control resource set CORESET 0 or the synchronization signal block SSB;
the ending frequency point of the frequency range for transmission of the PDSCH is a PRB with highest frequency of the CORESET 0 or the SSB; or
the center frequency point of the frequency range for transmission of the PDSCH is a center frequency point of the CORESET 0 or the SSB.

34. The method according to any one of claim 31 to 33, wherein the PDSCH is secluded within the frequency range for transmission of the PDSCH.

35. The method according to claim 34, wherein the frequency reference point is carried by at least one of:
a master information block MIB in a physical broadcast channel PBCH;
remaining minimum system information RMSI; or
a radio resource control RRC dedicated signaling.

36. The method according to any one of claims 31 to 35, wherein the PDSCH is used to carry at least one of following information:
RMSI, other system information OSI, random access response RAR, or paging.

37. A terminal device, comprising:
a first determining unit, configured to determine an initial downlink DL bandwidth part BWP based on a control resource set CORESET 0 or a synchronization signal block SSB; and
a receiving unit, configured to receive a common channel based on the initial DL BWP;
wherein, a bandwidth of the initial DL BWP is less than or equal to a maximum bandwidth supported by the terminal device.

38. The terminal device according to claim 37, wherein the maximum bandwidth supported by the terminal device is smaller than a bandwidth of the CORESET 0.

39. The terminal device according to claim 37 or 38, wherein first determining unit is further configured to:
in a case that the maximum bandwidth supported by the terminal device is smaller than a bandwidth of CORESET 0, determine, by the terminal device, the initial DL BWP based on the CORESET 0 or the SSB.

40. The terminal device according to any one of claims 37 to 39, the initial DL BWP is determined by at least one of following frequency reference point:
a starting frequency of the initial DL BWP;
an ending frequency of the initial DL BWP; or
a center frequency point of the initial DL BWP.

41. The terminal device according to claim 40, wherein the frequency reference point is determined according to at least one of:
the starting frequency point of the initial DL BWP is a PRB with lowest frequency of the CORESET 0 or the SSB;
the ending frequency point of the initial DL BWP is a PRB with highest frequency of the CORESET 0 or the SSB; or
the center frequency point of the initial DL BWP is a center frequency point of the CORESET 0 or the SSB.

42. The terminal device according to claim 40 or 41, wherein the frequency reference point is received from a network device or obtained by a protocol agreement.

43. The terminal device according to any one of claims 40 to 42, wherein the frequency reference point is carried by at least one of:
a master information block MIB in a physical broadcast channel PBCH;
remaining minimum system information RMSI; or
a radio resource control RRC dedicated signaling.

44. The terminal device according to claim 43, wherein, in a case that the frequency reference point is carried by the RMSI, the bandwidth of the initial DL BWP is used to transmit at least one of following information:
other system information OSI, random access response RAR, or paging.

45. A terminal device, comprising:
a second determining unit, configured to determine a frequency range for transmission of a common channel based on a control resource set CORESET 0 or a synchronization signal block SSB; and
a second receiving unit, configured to receive the common channel based on the frequency range for transmission of the common channel.

46. The terminal device according to claim 45, wherein a bandwidth corresponding to the frequency range for transmission of the common channel is less than or equal to a maximum bandwidth supported by the terminal device.

47. The terminal device according to claim 45 or 46, wherein a maximum bandwidth supported by the terminal device is smaller than a bandwidth of the CORESET 0.

48. The terminal device according to any one of claims 45 to 47, wherein the second determining unit is further configured to:
in a case that a maximum bandwidth supported by the terminal device is less than a bandwidth of the CORESET 0, determine the frequency range for transmission of the common channel based on the CORESET 0 or the SSB.

49. The terminal device according to any one of claims 45 to 47, wherein the frequency range for transmission of the common channel comprises a frequency range for transmission of a physical downlink shared channel PDSCH.

50. The terminal device according to claim 49, wherein the frequency range for transmission of the PDSCH is determined by at least one of following frequency reference point:
a starting frequency point of the frequency range for transmission of the PDSCH;
an ending frequency point of the frequency range for transmission of the PDSCH; or
a center frequency point of the frequency range for transmission of the PDSCH.

51. The terminal device according to claim 50, wherein the frequency reference point is determined according to at least one of:
the starting frequency point of the frequency range for transmission of the PDSCH is a physical resource block PRB with lowest frequency of the control resource set CORESET 0 or the synchronization signal block SSB;
the ending frequency point of the frequency range for transmission of the PDSCH is a PRB with highest frequency of the CORESET 0 or the SSB; or
the center frequency point of the frequency range for transmission of the PDSCH is a center frequency point of the CORESET 0 or the SSB.

52. The terminal device according to claim 51 or 50, wherein the frequency reference point is received from a network device or obtained by a protocol agreement.

53. The terminal device according to any one of claims 50 to 52, wherein the frequency reference point is carried by at least one of:
a master information block MIB in a physical broadcast channel PBCH;
remaining minimum system information RMSI; or
a radio resource control RRC dedicated signaling.

54. The terminal device according to any one of claims 49 to 51, wherein the PDSCH is scheduled within the frequency range for transmission of the PDSCH.

55. The terminal device according to any one of claims 49 to 54, wherein the PDSCH is used to carry at least one of following information:
RMSI, other system information OSI, random access response RAR, or paging.

56. The terminal device according to any one of claims 45 to 55, wherein the terminal device is a RedCap terminal with reduced capabilities, and the PDCCH received by the RedCap terminal and the PDCCH received by a new wireless NR terminal use different system information radio network temporary identifiers SI-RNTIs, use different scrambling codes for scrambling, or carry different downlink control indicators DCIs.

57. The terminal device according to any one of claims 45 to 56, wherein the terminal device is a RedCap terminal, and the RedCap terminal shares PDCCH CORESET configuration with a NR terminal.

58. A network device, comprising:
a first transmitting unit, configured to transmit a common channel to a terminal device based on an initial downlink DL bandwidth part BWP;
wherein, the initial DL BWP is determined based on a control resource set CORESET 0 or a synchronization signal block SSB, and a bandwidth of the initial DL BWP is less than or equal to a maximum bandwidth supported by the terminal device.

59. The network device according to claim 58, wherein the maximum bandwidth supported by the terminal device is smaller than a bandwidth of the CORESET 0.

60. The network device according to claim 58 or 59, the initial DL BWP is determined by at least one of following frequency reference point:
a starting frequency of the initial DL BWP;
an ending frequency of the initial DL BWP; or
a center frequency point of the initial DL BWP.

61. The network device according to claim 60, wherein the frequency reference point is determined according to at least one of:
the starting frequency point of the initial DL BWP is a PRB with lowest frequency of the CORESET 0 or the SSB;
the ending frequency point of the initial DL BWP is a PRB with highest frequency of the CORESET 0 or the SSB; or
the center frequency point of the initial DL BWP is a center frequency point of the CORESET 0 or the SSB.

62. The network device according to claim 61, wherein the frequency reference point is carried by at least one of:
a master information block MIB in a physical broadcast channel PBCH;
remaining minimum system information RMSI; or
a radio resource control RRC dedicated signaling.

63. The network device according to claim 62, wherein, in a case that the frequency reference point is carried by the RMSI, the bandwidth of the initial DL BWP is used to transmit at least one of following information:
other system information OSI, random access response RAR, or paging.

64. A network device, comprising:
a second transmitting unit, configured to transmit a common channel to a terminal device based on a frequency range for transmission of the common channel;
wherein, the frequency range for transmission of the common channel is determined based on a control resource set CORESET 0 or a synchronization signal block SSB.

65. The network device according to claim 64, wherein a bandwidth corresponding to the frequency range for transmission of the common channel is less than or equal to a maximum bandwidth supported by the terminal device.

66. The network device according to claim 64 or 65, wherein a maximum bandwidth supported by the terminal device is smaller than a bandwidth of the CORESET 0.

67. The network device according to claim 64 or 66, wherein the frequency range for transmission of the common channel comprises a frequency range for transmission of a physical downlink shared channel PDSCH.

68. The network device according to claim 67, wherein the frequency range for transmission of the PDSCH is determined by at least one of following frequency reference point:
a starting frequency point of the frequency range for transmission of the PDSCH;
an ending frequency point of the frequency range for transmission of the PDSCH; or
a center frequency point of the frequency range for transmission of the PDSCH.

69. The network device according to claim 68, wherein the frequency reference point is determined according to at least one of:
the starting frequency point of the frequency range for transmission of the PDSCH is a physical resource block PRB with lowest frequency of the control resource set CORESET 0 or the synchronization signal block SSB;
the ending frequency point of the frequency range for transmission of the PDSCH is a PRB with highest frequency of the CORESET 0 or the SSB; or
the center frequency point of the frequency range for transmission of the PDSCH is a center frequency point of the CORESET 0 or the SSB.

70. The network device according to claim 67 or 69, wherein the PDSCH is secluded within the frequency range for transmission of the PDSCH.

71. The network device according to claim 70, wherein the frequency reference point is carried by at least one of:
a master information block MIB in a physical broadcast channel PBCH;
remaining minimum system information RMSI; or
a radio resource control RRC dedicated signaling.

72. The network device according to claim 67 or 71, wherein the PDSCH is used to carry at least one of following information:
RMSI, other system information OSI, random access response RAR, or paging.

73. A terminal device comprising a processor and a memory, wherein the memory is configured to store a computer program, and the processor is configured to call and run the computer program stored in the memory, to cause the terminal device to perform the method according to any one of claims 1 to 21.

74. A network device comprising a processor and a memory, wherein the memory is configured to store a computer program, and the processor is configured to call and run the computer program stored in the memory, to cause the network device to perform the method according to any one of claims 22 to 36.

75. A chip comprising a processor, wherein the processor is configured to call and run a computer program from a memory, to cause a device installed with the chip to perform the method according to any one of claims 1 to 21.

76. A chip comprising a processor, wherein the processor is configured to call and run a computer program from a memory, to cause a device installed with the chip to perform the method according to any one of claims 22 to 36.

77. A computer-readable storage medium, configured to store a computer program, which when being executed by a device, causes the device to perform the method according to any one of claims 1 to 21.

78. A computer-readable storage medium, configured to store a computer program, which when being executed by a device, causes the device to perform the method according to any one of claims 22 to 36.

79. A computer program product comprising computer program instructions, which causes a computer to perform the method according to any one of claims 1 to 21.

80. A computer program product comprising computer program instructions, which causes a computer to perform the method according to any one of claims 22 to 36.

81. A computer program, wherein the computer program causes a computer to perform the method according to any one of claims 1 to 21.

82. A computer program, wherein the computer program causes a computer to perform the method according to any one of claims 22 to 36.
